# EUROPEAN PATENT SPECIFICATION

(11) **EP 2 962 443 B1**
(45) Date of publication and mention of the grant of the patent: **25.01.2017**
(21) Application number: 14704369.9
(22) Date of filing: 14.02.2014
(51) Int. Cl.: H04L 29/06, H04L 29/08, G06F 17/30

(54) **METHOD FOR ALLOWING A WEB SERVER TO DETECT THE LOGOUT OF A DISTANT TOKEN**
VERFAHREN ZUR BEFÄHIGUNG EINES WEB-SERVERS ZUR DETEKTION DER ABMELDUNG EINES ENTFERNTEN TOKEN
PROCÉDÉ PERMETTANT À UN SERVEUR WEB DE DÉTECTER LE DÉTACHEMENT D'UN DONGLE DISTANT

(30) Priority: 28.02.2013 EP 13305227
(43) Date of publication of application: 06.01.2016
(73) Proprietor: Gemalto SA, 92190 Meudon (FR)
(72) Inventor: GARREAU, Eric, F-13705 La Ciotat (FR)
(74) Representative: Grevin, Emmanuel
(86) International application number: PCT/EP2014/052942
(87) International publication number: WO 2014/131634

(56) References cited:
- WO-A1-00/54125
- WO-A1-01/22283
- Lu Hongqian Karen ET AL: "Prevent Online Identity Theft - Using Network Smart Cards for Secure Online Transactions" In: "Field Programmable Logic and Application", 1 January 2004 (2004-01-01), Springer Berlin Heidelberg, Berlin, Heidelberg, XP055042763, ISSN: 0302-9743 ISBN: 978-3-54-045234-8 vol. 3225, pages 342-353, DOI: 10.1007/978-3-540-30144-8_29, abstract; figures 1,5 * section 1 * * section 3 * * section 4 *

## Description

### (Field of the invention)

The present invention relates to methods of allowing a server to detect that a portable token has been disconnected from a distant client device. It relates particularly to methods of allowing a service hosted by a secure server to be aware that a portable token has been disconnected from a client device comprising a browser.

### (Background of the invention)

In a client/server system, an authentication of the client may be required in order to protect access to services or data of the server. The Username & Password scheme is one of the most widely used technique to authenticate users on servers like web sites. Another solution is to use a secret data stored in a portable electronic token plugged to the client device for allowing the server to authenticate the client. The portable electronic token is usually used during the authentication phase only. Unfortunately, there is no known solution for performing an easy and fast auto-logout at the server side when the token is unplugged.

There is a need for allowing the automatic cancellation at the server side of the session established between the client and the server as soon as the token is removed. WO 01/22283 A1 facilitates access to web pages by using a smart card and discloses to generate a card removal signal at the client side.

### (Summary of the Invention)

An object of the invention is to solve the above mentioned technical problem.

The object of the present invention is a method for allowing a service hosted by a secure server to be aware that a portable token has been disconnected from a client device. The client device comprises a browser. The method comprises the following steps:
- performing a short polling in the client device allowing the browser to detect that the portable token has been disconnected less than a first limited duration after disconnecting,
- sending a long polling request from the browser to a session manager for establishing a watchdog session by the session manager, the browser being configured to send to the session manager a further long polling request targeting said watchdog session while the portable token remains connected to the client device, said session manager rejecting said further long polling request if a second limited duration has elapsed,
- when the browser detects that the portable token has been disconnected, sending a disconnect message from the browser to the session manager,
- upon receipt of the disconnect message, sending a logout message from the session manager to the service.

Advantageously, the session manager may send the logout message to the service if the watchdog session is disconnected beyond the second limited duration.

Advantageously, the session manager may be hosted by the secure server.

Advantageously, the session manager may be hosted by a front-end server distinct from the secure server.

Advantageously, the portable token may comprise a contact communication interface adapted to connect the client device.

Advantageously, the portable token may comprise a contactless communication interface adapted to establish a wireless connection with the client device.

Another object of the invention is a system comprising a secure server, a client device and a session manager. The secure server comprises a service. The client device comprises a browser. The client device is able to connect a portable token. The browser is configured to detect that the portable token has been disconnected less than a first limited duration after disconnecting. The browser is configured to send a long polling request to the session manager for establishing a watchdog session by the session manager. The browser is configured to send to the session manager a further long polling request targeting the watchdog session while the portable token remains connected to the client device. The session manager is configured to reject the further long polling request if a second limited duration has elapsed. The browser is configured to send a disconnect message to the session manager when the browser detects that the portable token has been disconnected. The session manager is configured to send a logout message to the service upon receipt of the disconnect message.

Advantageously, the session manager may be configured to send the logout message to the service if the session is disconnected beyond the second limited duration.

Advantageously, the session manager may be hosted by the secure server.

Advantageously, the session manager may be hosted by a front-end server distinct from the secure server.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically an example of a system comprising a server and a client according to the prior art;
- Figure 2 depicts schematically an example of a system comprising a server and a client according to the invention;
- Figure 3 depicts schematically another example of a system comprising a server and a client according to the invention;
- Figure 4 is an example of a flowchart wherein the server receives a token logout message when the token is disconnected from the client according to the invention; and
- Figure 5 is an example of a flowchart wherein the server receives a token logout message when the browser of the client remains mute during a preset time.

### (Detailed description of the preferred embodiments)

The invention may apply to all kinds of client device intended to establish a secure session with a server by using a portable token for the authenticating step. These client devices may be devices like mobile phones, Personal Computers, Tablet PCs or any types of computer able to connect a portable token. The portable token may also be called a removable token.

In the present specification, the wording "time-out" means a preset period of time that will be allowed to elapse in a system before a specified event is to take place, unless another specified event occurs first.

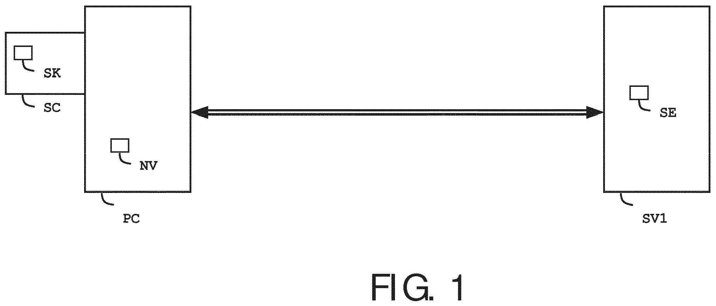

**Figure 1** shows schematically an example of architecture of a system according to the prior art. This system comprises a secure server SV1 and a client device PC. The secure server SV1 comprises a service SE. The client device PC comprises a browser NV. A removable token SC is plugged to the client device PC. The browser NV is able to initiate a secure session with the service SE by using a secret data SK stored in the token SC. The service SE opens a secure session and starts its own time-out. If the removable token SC is unplugged then the secure session remains active on server side until the end of the time-out of the service SE. This time-out is long in order to be adapted to human behavior, meaning that it can be set between a couple of minutes and twelve hours and even more, depending on the service SE. Thus it may happen that the secure server SV1 detects the disconnection of the token SC several hours after the actual logout of the token SC from the client device PC.

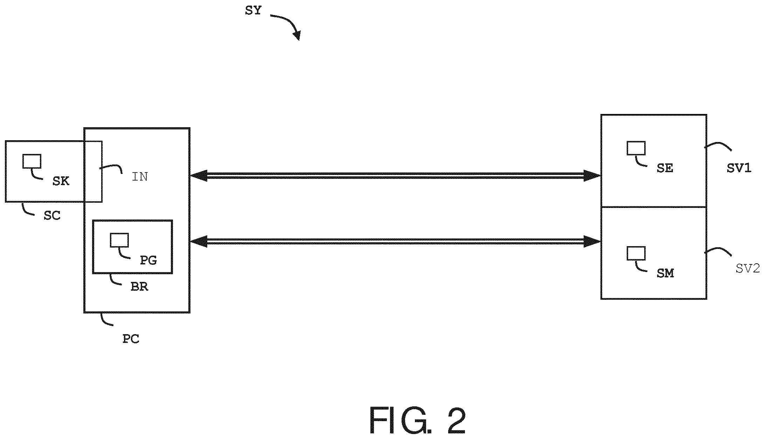

**Figure 2** shows schematically an example of architecture of a system SY according to the invention. The system SY comprises a secure server SV1, a server SV2 and a client device PC. The secure server SV1 and the server SV2 are side by side. In this example, the client device PC directly accesses the secure server SV1 and directly accesses the server SV2.

The secure server SV1 comprises a service SE and is similar to the server SV1 of the Figure 1. For instance, the service SE may be an identity Authentication service. Alternatively, the service SE may be a bank account management, a secure documents consultation service or any service requiring a strong authentication of the remote user.

In this example, the client device PC is a Personal Computer. The client device PC may also be a tablet, a mobile phone, a Personal Digital Assistant, a Wi-fi device or any machine comprising a browser intended to access a server which requires a remote token for managing security of a session.

The client device PC comprises a browser BR and a communication interface IN adapted to communicate with a removable token SC plugged to the client device PC. The removable token SC is similar to the token of Figure 1. The removable token SC comprises a secret data SK which is intended to be used for an authentication step with the secure server SV1. The removable token SC may be a smart card, a USB token or any portable device able to connect the communication interface IN. The browser BR is able to initiate a secure session with the service SE by using the secret data SK. The browser BR is configured to perform a short polling in order to detect that the removable token SC has been disconnected less than a limited duration T1 after disconnecting.

The limited duration T1 is set so that the browser BR quickly detects the disconnection of the token. Preferably, the duration T1 is set to one second. Alternatively, the duration T1 may be set up to 15 seconds or even more depending on the security requirements of the session managed by the service SE.

The server SV2 comprises a session manager SM which is configured to establish a watchdog session when a long polling request is received from the browser BR and to start a time-out T2 associated to the watchdog session. The session manager SM is configured to reject any further long polling request targeting the watchdog session if the time-out T2 has elapsed.

Preferably, the time-out T2 is set with a duration equal to 15 seconds. Alternatively, the time-out T2 may be set up to 30 seconds or even more depending on the security requirements of the session managed by the service SE. In all cases, the duration of the time-out T2 must be compatible with the average time required by a browser to reconnect through the intermediate network. In this example, the network is Internet. Alternatively the intermediate network may be any combination of LAN (Local Area Network), WLAN (Wireless Local Area Network, private network and public network.

The browser BR is configured to send a long polling request to the session manager SM. Advantageously, the service SE sends to the browser BR an application which is configured to manage the long polling request with the relevant session manager. Alternatively, the browser BR is configured with the identifier/address of the relevant session manager. The browser BR is configured to send to the session manager SM further long polling requests targeting the pending watchdog if the connection with the session manager SM is broken.

The browser BR is configured to send these further long polling requests only while the removable token SC remains connected to the client device PC. The browser BR is configured to send a disconnect message to the session manager SM as soon as the browser BR detects that the removable token SC has been disconnected.

The session manager SM is configured to send a logout message to the service SE upon receipt of a disconnect message from the browser BR.

Long polling is a variation of the traditional polling mechanism. With long polling, a client device requests data from a server in a similar way to a normal poll. However, if the server does not have any data available for the client device, instead of sending an empty response, the server holds the request and waits for some data to be available. Once the data becomes available on server side, a complete response is sent to the client device, allowing the client device to be notified by the server immediately.

According to the invention, the long polling is not expected to get any response. The long polling is only intended to maintain a proof of client presence.

The secret data SK may be permanently stored in the token SC or dynamically generated in the token SC. The secret data SK may be a key or a One-Time-Password (OTP) for example.

Preferably, the browser BR is a web-browser.

Advantageously, the browser BR may be formed by a conventional browser (like browser NV) combined with a special plug-in PG able to manage a secure link with the portable token SC and to provide the new features of the invention. For instance, the special plug-in PG may be a browser add-on based on a product, known as "Sconnect^{™}", developed by the applicant and which is partially disclosed in patent application WO2009/027409. The plug-in PG may be a browser extension configured to access tokens of smart card type.

Alternatively, the browser BR may be an updated browser NV. In other words, the browser BR can be build on the basis of a conventional browser which have been modified by adding a component dedicated do the new features.

Figure 2 shows two distinct servers SV1 and SV2. In another example of the invention, the secure server SV1 and the server SV2 may be merged in a single server machine. For instance, the secure server SV1 may comprise the session manager SM.

The browser BR and the service SE may communicate through any kind of relevant protocol. In a preferred embodiment, they may use HTTPS (HyperText Transfer Protocol Secure).

The communication interface IN may be either a contact interface or a contactless interface. For instance, a contact interface may comply with the ISO7816 standard or USB standard and a contactless interface may comply with ISO/CEI 14443 standard, Bluetooth standard, Wi-fi or NFC (Near field Communication) standard. In the case of a contact interface, the disconnection may result of a tearing of the token or of an interruption of the power supply of the token. In the case of a contactless interface, the disconnection may occur when the token is too far from the electromagnetic field source or when the electromagnetic field is disturbed by another device.

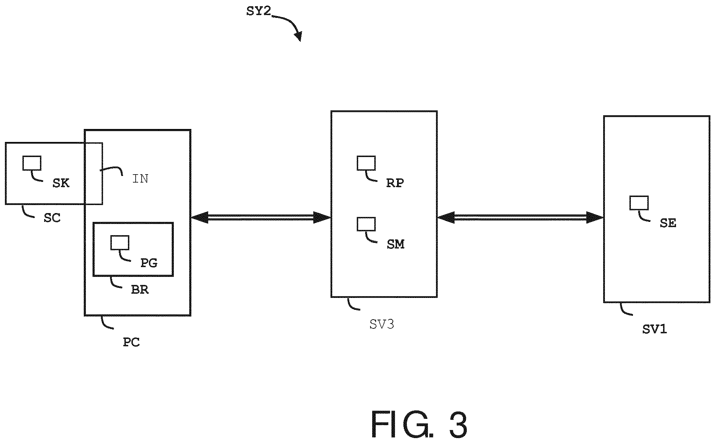

**Figure 3** shows schematically another example of architecture of a system SY2 according to the invention. The system SY2 comprises a secure server SV1, a front-end server SV3 and a client device PC.

In this example, the client device PC accesses the secure server SV1 through the front-end server SV3. The front-end server SV3 comprises a reverse proxy RP which allows the browser BR to communicate with the service SE. The front-end server SV3 comprises the session manager SM.

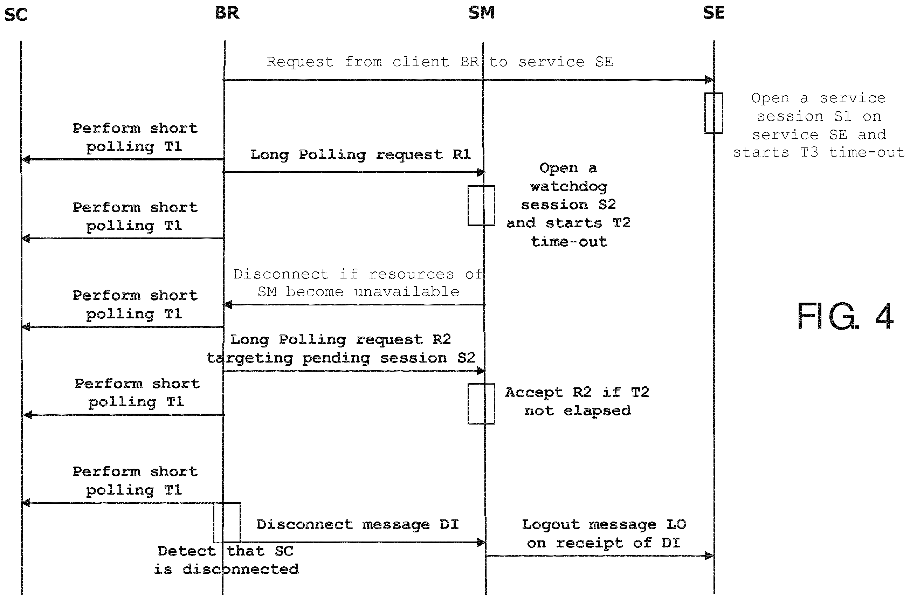

**Figure 4** shows an example of a flowchart wherein a service SE receives a token logout message when the token SC is disconnected from the client device PC according to the invention.

The browser BR sends a request to the service SE for starting a service session S1. The service SE authenticates the browser BR thanks to the secret data SK provided by the removable token SC. The request may be carried out by usual mechanisms allowing a client to establish a secure channel with a server. Then a service session S1 is open by the service SE and a time-out T3 is started. Such a time-out T3 is usually set to one hour. The time-out T3 allows the service SE to close the session S3 if the browser BR remains mute during the duration of the time-out T3. In response to the first request of the browser BR, the service SE sends an identification token (e.g. a session cookie) corresponding to the session S1 to the browser BR. (not shown at Figure 4).

The browser BR sends a long polling request R1 to the session manager SM. The long polling request R1 comprises the identification token supplied by the service SE. The sending of the long polling request R1 may be managed as configured by an application received by the browser BR from the service SE. The asynchronous long polling request R1 is allowed by the browser BR capabilities, for example by creating threads using the JavaScript language. In the same way, the short polling may be made asynchronously, for example by creating a thread using the JavaScript language. Alternatively, theses asynchronous pollings can also be made by installing in the browser a plug-in which performs theses tasks.

Following the receipt of the long polling request R1, the session manager SM opens a watchdog session S2 and starts a time-out T2. The duration of the time-out T2 can be set to 20 seconds for instance. A usual mechanism is used between the browser BR and the session manager SM for checking that the browser BR remains alive. IF the browser BR is closed, the session manager SM detects the new state of the browser BR thanks to the time-out T2.

The browser BR is set to a specific mode wherein it forever tries to reconnect the session manager SM as long as the token SC remains connected to the client device PC.

Advantageously, the session manager SM may manage a hash table storing a cookie previously sent by the browser BR with the long polling request R1. The session manager SM associates the watchdog session S2 with the received cookie. The session manager SM may receive a large number of polling requests coming from a plurality of clients. When the number of connections from clients reaches a preset threshold, the session manager SM may send a disconnect message to eldest clients in order to get free connection slots. If the browser BR receives such a disconnect message and the token is still connected, the browser BR sends a new long polling request R2 to the session manager SM for resuming the session S2. Upon receipt of the long polling request R2, the session manager SM either rejects the long polling request R2 if the time-out T2 has elapsed or confirms the session S2 and cancels the time-out T2.

In parallel to the long polling requests, the browser BR performs a short polling in order to detect that the removable token SC has been disconnected less than a short duration T1 after disconnecting. Preferably, the short duration T1 is set to one second so that the time that elapses between the disconnection of the token SC and the moment the browser BR detects the token SC is disconnected is less than one second.

When the browser BR detects that the token SC is disconnected, the browser BR sends as soon as possible a Disconnect message DI to the session manager SM. The Disconnect message DI comprises a data allowing the session manager SM to identify the browser BR and the token SC. For instance, the data may be the session cookie associated with the watchdog session S2. Thanks to the Disconnect message DI, the session manager SM is aware of the disconnection of the token SC. Upon receipt of the Disconnect message DI, the session manager SM sends as soon as possible a Logout message LO to the service SE. Thus the service SE is quickly aware that the removable token SC is disconnected from the client device PC.

In response to the Logout message LO, the service SE may make an appropriate decision. For example, the SE closes the service session S1 or blocks the access rights to the service session S1.

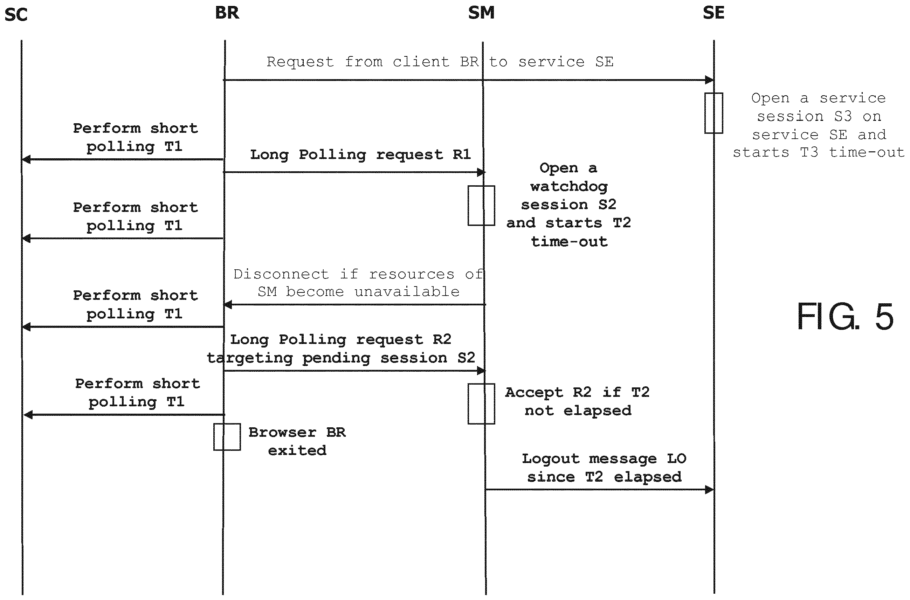

**Figure 5** shows an example of a flowchart wherein a service SE receives a token logout message when the browser BR is closed.

The first part of the flowchart of Figure 5 is similar to the beginning of the Figure 4. A service session S3 is open on service SE. In response, the service SE sends an identification token (e.g. the session identifier) to the browser BR. (not shown at Figure 5). The browser BR performs a short polling T1 and sends a long polling request R1 to the session manager SM. The long polling request R1 comprises the identification token provided by the service SE. The session manager SM opens a watchdog session S2 and starts a time-out T2 associated with the session S2.

According to the flowchart of Figure 4, the browser BR is closed while the token SC remains connected. This closing is performed without sending a specific message to the session manager SM. After a time T2, the session manager SM detects that the browser BR is unavailable and sends an immediate Logout message LO to the service SE. The Logout message LO comprises the identification token so that the service SE is able to match up the Logout message LO with the service session S3. Thus the service SE is quickly aware that the browser BR is no more available for the service session S3.

## Claims

1. A **method** for allowing a service (SE) hosted by a secure server (SV1) to be aware that a portable token (SC) has been disconnected from a client device (PC), said client device (PC) comprising a browser (BR), the method comprises the following steps:
- performing a short polling in the client device (PC) allowing the browser (BR) to detect that the portable token (SC) has been disconnected less than a first limited duration (T1) after disconnecting,
- sending a long polling request (R1) from the browser (BR) to a session manager (SM) for establishing a watchdog session (S2) by the session manager (SM), the browser (BR) being configured to send to the session manager (SM) a further long polling request (R2) targeting said watchdog session (S2) while the portable token (SC) remains connected to the client device (PC), said session manager (SM) rejecting said further long polling request (R2) if a second limited duration (T2) has elapsed,
- when the browser (BR) detects that the portable token (SC) has been disconnected, sending a disconnect message (DI) from the browser (BR) to the session manager (SM),
- upon receipt of the disconnect message (DI), sending a logout message (LO) from the session manager (SM) to the service (SE).

2. A method according to claim 1, wherein the session manager (SM) sends the logout message (LO) to the service (SE) if the watchdog session (S2) is disconnected beyond the second limited duration (T2).

3. A method according to claim 1, wherein the session manager (SM) is hosted by the secure server (SV1).

4. A method according to claim 1, wherein the session manager (SM) is hosted by a front-end server (SV3) distinct from the secure server (SV1).

5. A method according to claim 1, wherein the portable token (SC) comprises a contact communication interface adapted to connect the client device (PC).

6. A method according to claim 1, wherein the portable token (SC) comprises a contactless communication interface adapted to establish a wireless connection with the client device (PC).

7. A **system** (SY) comprising a secure server (SV1), a client device (PC) and a session manager (SM), the secure server (SV1) comprising a service (SE), the client device (PC) comprising a browser (BR), the client device (PC) being able to connect a portable token (SC), the browser (BR) is configured to detect that the portable token (SC) has been disconnected less than a first limited duration (T1) after disconnecting, in that the browser (BR) is configured to send a long polling request (R1) to the session manager (SM) for establishing a watchdog session (S2) by the session manager (SM), in that the browser (BR) is configured to send to the session manager (SM) a further long polling request (R2) targeting said watchdog session (S2) while the portable token (SC) remains connected to the client device (PC), in that said the session manager (SM) is configured to reject said further long polling request (R2) if a second limited duration (T2) has elapsed, in that the browser (BR) is configured to send a disconnect message (DI) to the session manager (SM) when the browser (BR) detects that the portable token (SC) has been disconnected, and in that the session manager (SM) is configured to send a logout message (LO) to the service (SE) upon receipt of the disconnect message (DI).

8. A system (SY) according to claim 7, wherein the session manager (SM) is configured to send the logout message (LO) to the service (SE) if the session is disconnected beyond the second limited duration (T2).

9. A system (SY) according to claim 7, wherein the session manager (SM) is hosted by the secure server (SV1).

10. A system (SY) according to claim 7, wherein the session manager (SM) is hosted by a front-end server (SV3) distinct from the secure server (SV1).

## Patentansprüche

1. Verfahren, mit dem es einem Dienst (SE), der von einem sicheren Server (SV1) gehostet wird, ermöglicht wird zu erkennen, dass ein tragbarer Token (SC) von einer Clientvorrichtung (PC) getrennt wurde, wobei die Clientvorrichtung (PC) einen Browser (BR) aufweist und das Verfahren die folgenden Schritte umfasst:
- Ausführen einer kurzen Abfrage in der Clientvorrichtung (PC), wodurch es dem Browser (BR) ermöglicht wird zu erfassen, dass der tragbare Token (SC) nach dem Trennen kürzer als eine erste begrenzte Dauer (T1) getrennt wurde,
- Senden einer langen Abfrageanforderung (R1) von dem Browser (BR) zu einem Sitzungsmanager (SM), so dass von dem Sitzungsmanager (SM) eine Überwachungssitzung (S2) hergestellt wird, wobei der Browser (BR) dazu ausgelegt ist, eine weitere lange Abfrageanforderung (R2) zu dem Sitzungsmanager (SM) zu senden, die sich auf die Überwachungssitzung (S2) bezieht, während der tragbare Token (SC) mit der Clientvorrichtung (PC) verbunden bleibt, wobei der Sitzungsmanager (SM) die weitere lange Abfrageanforderung (R2) zurückweist, wenn eine zweite begrenzte Dauer (T2) abgelaufen ist,
- Senden einer Trennungsnachricht (DI) von dem Browser (BR) zu dem Sitzungsmanager (SM), wenn der Browser (BR) die Trennung des tragbaren Tokens (SC) erfasst,
- Senden einer Abmeldenachricht (LO) von dem Sitzungsmanager (SM) zu dem Dienst (SE) beim Empfangen der Trennungsnachricht (DI).

2. Verfahren nach Anspruch 1, wobei der Sitzungsmanager (SM) die Abmeldenachricht (LO) zu dem Dienst (SE) sendet, wenn die Überwachungssitzung (S2) über die zweite begrenzte Dauer (T2) hinaus unterbrochen ist.

3. Verfahren nach Anspruch 1, wobei der Sitzungsmanager (SM) von dem sicheren Server (SV1) gehostet wird.

4. Verfahren nach Anspruch 1, wobei der Sitzungsmanager (SM) von einem Frontendserver (SV3), der sich von dem sicheren Server (SV1) unterscheidet, gehostet wird.

5. Verfahren nach Anspruch 1, wobei der tragbare Token (SC) eine Kontaktkommunikationsschnittstelle aufweist, die dazu geeignet ist, die Clientvorrichtung (PC) zu verbinden.

6. Verfahren nach Anspruch 1, wobei der tragbare Token (SC) eine kontaktlose Kommunikationsschnittstelle aufweist, die dazu geeignet ist, eine drahtlose Verbindung mit der Clientvorrichtung (PC) herzustellen.

7. System (SY) mit einem sicheren Server (SV1), einer Clientvorrichtung (PC) und einem Sitzungsmanager (SM), wobei der sichere Server (SV1) einen Dienst (SE) umfasst, die Clientvorrichtung (PC) einen Browser (BR) aufweist, die Clientvorrichtung (PC) einen tragbaren Token (SC) verbinden kann und der Browser (BR) dazu ausgelegt ist zu erfassen, dass der tragbare Token (SC) nach dem Trennen kürzer als eine erste begrenzte Dauer (T1) getrennt wurde, dadurch, dass der Browser (BR) dazu ausgelegt ist, eine lange Abfrageanforderung (R1) zu dem Sitzungsmanager (SM) zu senden, so dass von dem Sitzungsmanager (SM) eine Überwachungssitzung (S2) hergestellt wird, dadurch, dass der Browser (BR) dazu ausgelegt ist, eine weitere lange Abfrageanforderung (R2) zu dem Sitzungsmanager (SM) zu senden, die sich auf die Überwachungssitzung (S2) bezieht, während der tragbare Token (SC) mit der Clientvorrichtung (PC) verbunden bleibt, dadurch, dass der Sitzungsmanager (SM) dazu ausgelegt ist, die weitere lange Abfrageanforderung (R2) zurückzuweisen, wenn eine zweite begrenzte Dauer (T2) abgelaufen ist, dadurch, dass der Browser (BR) dazu ausgelegt ist, eine Trennungsnachricht (DI) zu dem Sitzungsmanager (SM) zu senden, wenn der Browser (BR) die Trennung des tragbaren Tokens (SC) erfasst, und dadurch, dass der Sitzungsmanager (SM) dazu ausgelegt ist, beim Empfangen der Trennungsnachricht (DI) eine Abmeldenachricht (LO) zu dem Dienst (SE) zu senden.

8. System (SY) nach Anspruch 7, wobei der Sitzungsmanager (SM) dazu ausgelegt ist, die Abmeldenachricht (LO) zu dem Dienst (SE) zu senden, wenn die Sitzung über die zweite begrenzte Dauer (T2) hinaus unterbrochen ist.

9. System (SY) nach Anspruch 7, wobei der Sitzungsmanager (SM) von dem sicheren Server (SV1) gehostet wird.

10. System (SY) nach Anspruch 7, wobei der Sitzungsmanager (SM) von einem Frontendserver (SV3), der sich von dem sicheren Server (SV1) unterscheidet, gehostet wird.

## Revendications

1. **Procédé** pour permettre à un service (SE) hébergé par un serveur sécurisé (SV1) de percevoir qu'un jeton portable (SC) a été déconnecté d'un appareil client (PC) comprenant un navigateur (BR),
le procédé comprend les étapes suivantes :
- exécution d'une courte scrutation dans l'appareil client (PC) pour permettre au navigateur (BR) de détecter que le jeton portable (SC) a été déconnecté pendant moins d'une première durée limitée (T1) après la déconnexion,
- envoi d'une demande de scrutation longue (R1) du navigateur (BR) vers un gestionnaire de session (SM) pour établir une session de surveillance (S2) par le gestionnaire de session (SM), le navigateur (BR) étant configuré pour envoyer au gestionnaire de session (SM) une demande additionnelle de scrutation longue (R2) qui cible ladite session de surveillance (S2) tandis que le jeton portable (SC) reste connecté à l'appareil client (PC), ledit gestionnaire de session (SM) rejetant ladite demande additionnelle de scrutation longue(R2) si une seconde durée (T2) s'est écoulée,
- lorsque le navigateur (BR) détecte que le jeton portable (SC) a été déconnecté, envoi d'un message de déconnexion (DI) du navigateur (BR) vers le gestionnaire de session (SM),
- à réception du message de déconnexion (DI), envoi d'un message de fermeture de session (LO) du gestionnaire de session (SM) au service (SE).

2. Procédé selon la revendication 1, **caractérisé en ce que** le gestionnaire de session (SM) envoie le message de fermeture de session (LO) au service (SE) si la session de surveillance (S2) est déconnectée au-delà de la deuxième durée limitée (T2).

3. Procédé selon la revendication 1, **caractérisé en ce que** le gestionnaire de session (SM) est hébergé par le serveur sécurisé (SV1).

4. Procédé selon la revendication 1, **caractérisé en ce que** le gestionnaire de session (SM) est hébergé par un serveur frontal (SV3) distinct du serveur sécurisé (SV1).

5. Procédé selon la revendication 1, **caractérisé en ce que** le jeton portable (SC) comprend une interface de communication à contact capable de se connecter à l'appareil client (PC).

6. Procédé selon la revendication 1, **caractérisé en ce que** le jeton portable (SC) comprend une interface de communication sans contact capable d'établir une connexion sans fil avec l'appareil client (PC).

7. **Système** (SY) comprenant un serveur sécurisé (SV1), un appareil client (PC) et un gestionnaire de session (SM), le serveur sécurisé (SV1) comprenant un service (SE), l'appareil client (PC) comprenant un navigateur (BR), l'appareil client (PC) étant capable de se connecter à un jeton portable (SC),
le navigateur (BR) est configuré pour détecter que le jeton portable (SC) a été déconnecté pendant moins d'une première durée limitée T1) après déconnexion, en ce que le navigateur (BR) est configuré pour envoyer une demande de scrutation longue (R1) vers le gestionnaire de session (SM) pour établir une session de surveillance (S2) par le gestionnaire de session (SM), en ce que le navigateur (BR) est configuré pour envoyer au gestionnaire de session (SM) une demande additionnelle de scrutation longue (R2) qui cible ladite session de surveillance (S2) tandis que le jeton portable (SC) reste connecté à l'appareil client (PC), en ce que ledit gestionnaire de session (SM) est configuré pour rejeter ladite demande additionnelle de scrutation longue (R2) si une deuxième durée limitée (T2) s'est écoulée, en ce que le navigateur (BR) est configuré pour envoyer un message de déconnexion (DI) vers le gestionnaire de session (SM) lorsque le navigateur (BR) détecte que le jeton portable (SC) a été déconnecté, et en ce que le gestionnaire de session (SM) est configuré pour envoyer un message de fermeture de session (LO) au service (SE) à réception du message de déconnexion (DI).

8. Système (SY) selon la revendication 7, **caractérisé en ce que** le gestionnaire de session (SM) est configuré pour envoyer le message de fermeture de session (LO) au service (SE) si la session est déconnectée au-delà de la deuxième durée limitée (T2).

9. Système (SY) selon la revendication 7, **caractérisé en ce que** le gestionnaire de session (SM) est hébergé par le serveur sécurisé (SV1).

10. Système (SY) selon la revendication 7, **caractérisé en ce que** le gestionnaire de session (SM) est hébergé par un serveur frontal (SV3) distinct du serveur sécurisé (SV1).
